# EUROPEAN PATENT APPLICATION

(11) **EP 1 932 878 A1**
(43) Date of publication of application: **18.06.2008**
(21) Application number: 06026111.2
(22) Date of filing: 15.12.2006
(51) Int. Cl.: C08K 5/00

(54) **Use of compostions comprising isocyanurates**

(71) Applicant: Chemtura Europe GmbH, 8500 Frauenfeld (CH)
(72) Inventor: Totelin, Claude, 1200 Woluwé St Lambert-Bruxelles (BE); Lievens, Els, 2200 Herentals (BE); Hill, Jonathan Simon, Flixton Manchester M41 5 GR (GB); Keck-Antoine, Klaus, 1090 Jette-Bruxelles (BE)
(74) Representative: Böhm, Thomas

(57) **Abstract**

Use of an additive composition comprising a compound of the following formula (I): 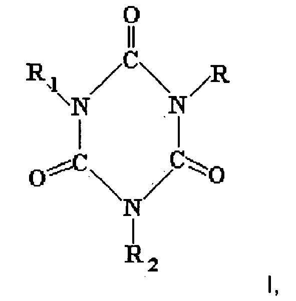 wherein R, R₁, and R₂ are of the following formula (II) 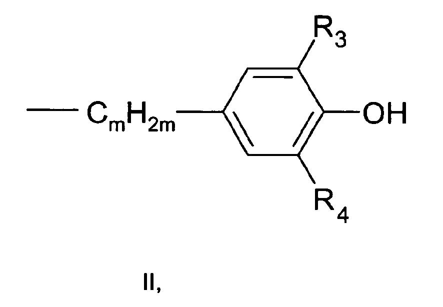 wherein
m is an integer of from 1 to 4,
R₃ is a methyl group,
R₄ is an alkyl group,
for improving (a) the preservation of the intrinsic molecular integrity of a polymer to which the additive is added, measured by the melt flow index protection, and/or (b) the gas fading resistance of a polymer to which the additive is added in comparison to the use of tris-(3,5-di-t-butyl-4-hydroxy-benzyl)isocyanurate as additive in said polymer.

## Description

The present invention relates to the use of an additive composition comprising a tris-(dialkyl substituted hydroxyphenylalkyleneyl)isocyanurate for improving (a) the preservation or protection of the intrinsic molecular integrity of a polymer to which the additive composition is added, measured by the melt flow index protection, and/or (b) the gas fading resistance of a polymer to which the additive composition is added in comparison to the use of tris-(3,5-di-t-butyl-4-hydroxybenzyl)isocyanurate as additive in said polymer. Particularly, the present invention is useful with regard to organic polymeric materials, both natural and synthetic, which are subject to the deleterious effects of oxygen, heat and visible or ultraviolet light and other oxidizing agents like for example and not limited to NOₓ, chlorine or ozone.

### Background of the invention

Goodrich (US patent 3,531,483) found hydroxyphenylalkyleneyl isocyanurates useful as stabilizer additives. The main component can be described by the following general formula: 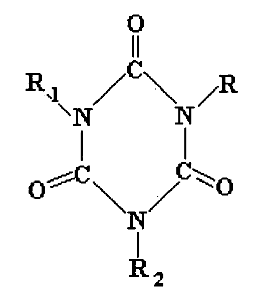 in which R, R₁ and R₂ are preferably similar and have the general formula: 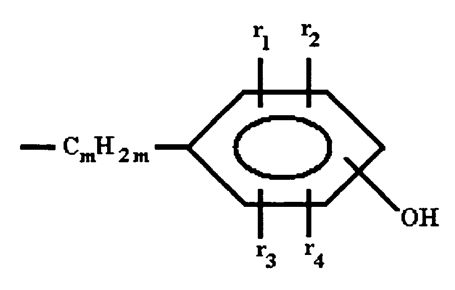 where
- m is an integer from 1 to 4
- r₁ is an alkyl group, either aliphatic or cycloaliphatic group, containing from 1 to 18 carbon atoms positioned immediately adjacent to the hydroxyl group on the ring and preferably a t-alkyl group containing from 4 to 12 carbon atoms
- r₂, r₃ and r₄ are hydrogen or an aliphatic or cycloaliphatic group, containing from 1 to 18 carbon atoms; with r₂ preferably an alkyl group containing from 1 to 12 carbon atoms; and with r₃ and r₄ being preferably hydrogen.

Goodrich quoted amongst the most relevant R groups 3,5 -di-butyl-4-hydroxybenzyl radical as the preferred one. The corresponding molecule has been marketed since then as "Goodrite^{®} 3114" or as Anox^{®} IC-14, herein after referred to as "additive 1". 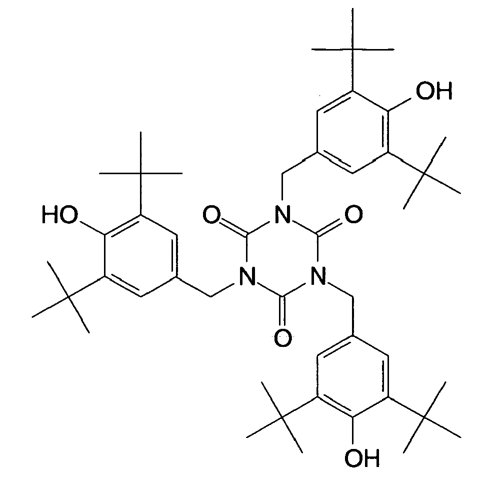 Additive 1 = tris-(3,5-di-t-butyl-4-hydroxy-benzyl)isocyanurate CAS No. 27676-62-6

Goodrich mentioned also the 3-methyl-5-t-butyl-4-hydroxybenzyl radical and the 3,5-dimethyl-4-hydroxybenzyl radical as possible R groups.

Most of the examples in the Goodrich patent make use of Goodrite^{®} 3114 (additive 1). It is either used alone or in combination with other co-stabilzers or co-additives in various polymers like high density polyethylene (HDPE), polypropylene (PP), natural rubber, cis-polyisoprene, plasticized, unplasticized and chlorinated polyvinyl chloride (PVC), acrylonitrile-butadiene-styrene-copolymer (ABS), elastomeric polyurethane, various copolymers or mixtures.

The molecule used in example XXIII of the Goodrich patent, tris-(3-methyl-5-t-butyl-4-hydroxybenzyl)isocyanurate, is herein after referred to as "additive 2". 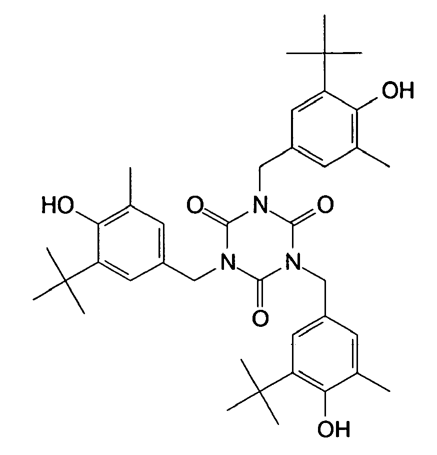 Additive 2 = tris-(3-methyl-5-t-butyl-4-hydroxybenzyl)isocyanurate CAS No. 29623-81-2

The Goodrich patent quantified the efficiency of the additives used by measuring oxidation induction time and appearance of "significant" amount of carbonyls when stored in forced air oven.

However, the only information disclosed in the Goodrich patent about the efficiency of additive 2 when used alone is that HDPE stabilized with 0.1 part (1000 ppm) of additive 2 had an induction period of 25 hours when aged at 140°C in oxygen, whereas the unstabilized control auto-oxidized in less than 1 hour (example XXIII of the Goodrich patent). In comparison thereto a value of 58 hours is measured in Example IV, Sample 4 of the Goodrich patent, when carrying out the same test with 0.1 % of tris-(3,5-di-t-butyl-4-hydroxybenzyl)isocyanurate (additive 1). Thus, one would conclude that additive 1 is a better stabilizer than additive 2.

### Description of the invention

Surprisingly, the present inventors found that stability of a polymer particularly (a) the preservation or protection of the intrinsic molecular integrity of a polymer to which the additive composition is added, can be improved, as measured by the melt flow index protection, and/or (b) the gas fading resistance of a polymer to which the additive composition is added can be improved by using an additive composition comprising a compound of the following formula (I): 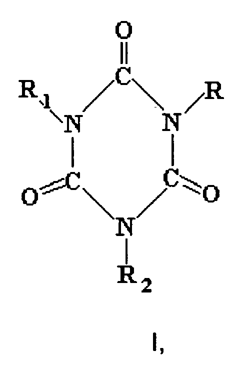 wherein R, R₁, and R₂ are of the following formula (II) 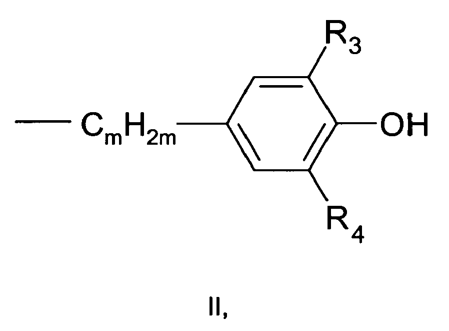 wherein
m is an integer of from 1 to 4,
R₃ is a methyl group,
R₄ is an alkyl group,

in comparison to the use of tris-(3,5-di-t-butyl-4-hydroxy-benzyl)isocyanurate as additive in said polymer.

The present inventors identified that an additive composition comprising a compound as defined above provides a better protective, stabilizing effect for preserving and protecting the intrinsic molecular integrity of organic polymeric materials, both natural and synthetic, which are subject to the deleterious effects of oxygen, heat and visible or ultraviolet light and other oxidizing agents like for example and not limited to NOₓ, chlorine or ozone.

It is believed that the observed improvement in preservation and protection of the intrinsic molecular integrity as measured for instance by the melt flow index protection is due to a protection of the polymer chains. Thus, the polymer is preserved and protected against the deleterious effects of oxygen, heat and visible or ultraviolet light and other oxidizing agents like for example and not limited to NOₓ, chlorine or ozone.

NOₓ means in this description nitrogen oxides, such as NO, NO₂, NO₃, N₂O, N₂O₃, N₂O₄, N₂O₅, preferably nitrous fumes comprising mainly NO and NO₂.

Hence, the present invention is useful for preserving and protecting a polymer against the deleterious effects of heat, visible and/or ultraviolet light and oxygen and/or other oxidizing agents, preferably NOₓ, chlorine and/or ozone.

According to a preferred embodiment of the present invention, sulfur compounds containing two or more sulfur atoms are absent in the additive composition. It is particularly preferred that sulfur-based compounds are absent in the additive composition.

In a preferred embodiment of the present invention, m is 1 in the above formula (I). Further, it is preferred that R₄ is a C₁ to C₄ alkyl group. Particularly, it is preferred that R₄ is a methyl group or a tert-butyl group.

The additive composition may comprise one or more co-additive(s) or co-stabilizer(s). Preferably, the co-additive(s) or co-stabilizer(s) is/are selected from the group of phosphites, antacids, color suppressants, ultra violet (UV) stabilizers, further antioxidants, and amine stabilizers including hindered amine light stabilizers (HALS).

In a preferred embodiment of the present invention, the co-additives or co-stabilizers are a phosphite and a color suppressant.

The polymer may be a homopolymer of a polyurethane, polyolefin, polystyrene, polyamide, or polyester or the polymer may be a copolymer comprising at least one of a polyurethane, polyolefin, polystyrene, polyamide, polyol, polyester, polybutadiene, or acrylonitrile.

According to a preferred embodiment of the present invention, the polymer is a polyethylene or polypropylene.

According to a further preferred embodiment, the polymer is in the form of a fiber, preferably spandex.

Spandex fibers are also known as elastane. They are synthetic fibers known for their exceptional elasticity and stretchability. They are preferably long chain synthetic polymers spun for instance from a block copolymer having preferably a polyurethane content of at least 85 % by weight. They are sold under the trademarks Lycra®, Elaspan® and Dorlastan®. They have alternating segments of polyurethane and of polyol, e.g. polyethylene glycol, or of polyester. The polyol may contain up to 100 alcohol monomers, preferably up to 40 or 50. The crystallinity and hardness of the polyurethane segments give spandex fibers their hardness and strength. On the other hand the soft and rubbery polyol or polyester segments contribute to spandex fibers elasticity.

In a further preferred embodiment of the present invention, the polymer is a polyolefin, preferably a polyethylene or polypropylene, or the polymer is a polystyrene.

The additive composition may be added to the polymer in a concentration of 10 ppm to 50,000 ppm, preferably 10 ppm to 30,000 ppm, more preferably 10 ppm to 10,000 ppm, even more preferably below 1,000 ppm, based on the weight of the polymer and dependent on the nature of the polymer. If the polymer is in the form of spandex fibers, concentrations in the range of 1,000 to 30,000 ppm based on the weight of the polymer are in particular preferred.

Particularly preferred is an embodiment, wherein the additive composition is added to a polyolefin in a concentration of 10 ppm to 1,000 ppm, preferably below 1,000 ppm, based on the weight of the polyolefin.

According to a preferred embodiment of the present invention, the additive composition is useful for providing said polymer, particularly in the form of a fiber, preferably spandex, with a gas fading resistance, i.e. resistance to discoloration due to atmospheric fumes containing in particular NOₓ.

Surprisingly, it has been found that the time to embrittlement in forced-air oven at 135°C or at 150°C achieved with PP stabilized with tris-(3-methyl-5-t-butyl-4-hydroxybenzyl)isocyanurate (additive 2) was comparable or even better than the time achieved with tris-(3,5-di-t-butyl-4-hydroxy-benzyl)isocyanurate (additive 1) as shown in the following tables:
In those tables the time to embrittlement has been measured by recording the time at which samples break when bended manually.

**Table 1: time (in hours) required to reach embrittlement at 135°C**

| | | | | |
|---|---|---|---|---|
| Antioxidant concentration | 250 ppm | 500 ppm | 750 ppm | 1000 ppm |
| Additive 1 | 305 h | 324 h | 400 h | 554 h |
| Additive 2 | 305 h | 373 h | 433 h | 498 h |

**Table 2: time (in hours) required to reach embrittlement at 150°C**

| | | | | |
|---|---|---|---|---|
| Antioxidant concentration | 250ppm | 500ppm | 750ppm | 1000ppm |
| Additive 1 | 38 h | 38 h | 39 h | 51 h |
| Additive 2 | 38 h | 38 h | 39 h | 42 h |

(see experimental details in example 1 below)

It should be noted that the improvement caused by additive 2 seems to be leveling out above 750 ppm and this is perhaps due to the limited solubility of this additive in PP.

It is clear that there is a significant difference in the behavior of tris-(3-methyl-5-t-butyl-4-hydroxybenzyl)isocyanurate (additive 2) as reported in the Goodrich data on one hand and the performance found in the present application on the other hand. This difference is probably due to the purity of the sample used as Goodrich reported for this molecule a melting point of 148-150°C whereas a value of 192-194°C was measured in the present application.

Even more surprisingly, it has been found by the present inventors that the main parameter characterizing an antioxidant efficiency - namely the polymer molecules protection as measured for instance by the melt flow index protection in a polymer, preferably PP - revealed a very strong advantage in favor of tris-(3-methyl-5-t-butyl-4-hydroxybenzyl)isocyanurate (additive 2) over tris-(3,5-di-t-butyl-4-hydroxy-benzyl)isocyanurate (additive 1). The Melt Flow Index (MFI) is measured according to ISO norm 1133 at 230°C under a load of 2.16 kg. As PP degrades only by chain scission, this degradation can be measured unambiguously by an increase of the melt flow index value. This clear advantage was observed for a range of additive concentrations as shown in the following table:

**Table 3: MFI (230°C-2.16 kg) after 5 extrusion passes**

| Content of antioxidant | MFI (230°C-2.16 kg) in g/10 min | | | | | |
|---|---|---|---|---|---|---|
| | 0 ppm | 125 ppm | 250 ppm | 500 ppm | 750 ppm | 1000 ppm |
| Additive 1 | 34.9 | - | 28.9 | 25.0 | 22.3 | 20.9 |
| Additive 2 | 34.9 | 21.1 | 17.9 | 16.4 | 15.1 | 16.3 |

(see experimental details in example 2 below)

In fact it has been found that tris-(3-methyl-5-t-butyl-4-hydroxybenzyl)-isocyanurate (additive 2) reached its optimal effect at much lower concentration than tris-(3,5-di-t-butyl-4-hydroxy-benzyl)isocyanurate (additive 1).

Likewise, superior results have been found for another molecule mentioned in the Goodrich patent (but without being used in any examples) and inter alia in JP 03-079648: tris-(3,5-di-methyl-4-hydroxy-benzyl)isocyanurate (additive 3). 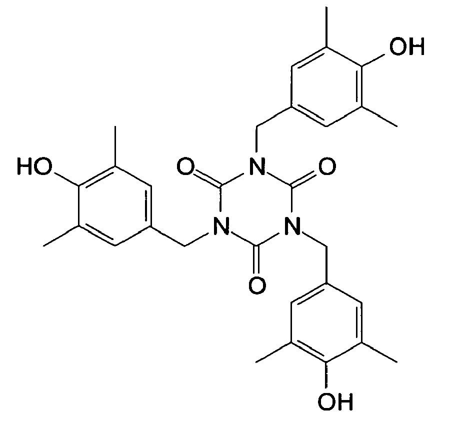 Additive 3 = tris-(3,5-di-methyl-4-hydroxy-benzyl)isocyanurate CAS No. 30458-75-4

**Table 4: MFI (230°C-2.16 kg) after 5 extrusion passes**

| Content of antioxidant | MFI (230°C-2.16 kg) in g/10 min | | | | | |
|---|---|---|---|---|---|---|
| | 0 ppm | 125 ppm | 250 ppm | 500 ppm | 750 ppm | 1000 ppm |
| Additive 1 | 34.9 | - | 28.9 | 25.0 | 22.3 | 20.9 |
| Additive 2 | 34.9 | 21.1 | 17.9 | 16.4 | 15.1 | 16.3 |
| Additive 3 | 34.09 | 18.1 | 17.9 | 17.9 | 18.3 | 18.3 |

(see experimental details in example 2 below)

As can be seen from the results of Table 4 a higher efficiency at very low concentrations is obtained by using additive 2 and 3, respectively, in comparison to additive 1. A high efficiency is a good indication that a given antioxidant acts as a fast and efficient radical scavenger. This is useful in several polymer applications, particularly PP applications like in particular: tapes, pipes, bi-oriented films, fibers, extrusion-blow molding, profile and general extrusion, compounding with various fillers and injection molding.

Moreover, the present invention is also very useful in several other polymers than PP, in particular when cross-linking should be prevented. This is the case of polyethylene produced either under high or low pressure, polystyrene and in particular high impact polystyrene, styrene copolymers like in particular ABS and several natural or synthetic elastomers.

It has been found that even when using tris-(3-methyl-5-t-butyl-4-hydroxybenzyl)isocyanurate (additive 2) and/or tris-(3,5-di-methyl-4-hydroxybenzyl)isocyanurate (additive 3) at the very low level of 250 ppm it was possible to substitute up to 4/5 of the phenolic antioxidant (AO) with a phosphite and to achieve nearly the same melt flow protection but with a better color. This color is measured by the Yellowness Index (YI) which is measured according to ASTM norm E 313. A better color means in practice a lower Yellowness Index value. It has been found by the present inventors that acceptable results with regard to the Yellowness Index are achieved, while the melt flow index is improved when using additive 2 and/or additive 3 in an additive composition according to the present invention in comparison to using additive 1. The results are presented in the following table:

**Table 5: MFI (230°C-2.16 kg) after 5 extrusion passes**

| | MFI (230°C, 2.16 kg) at pass 5 | | |
|---|---|---|---|
| Phosphite | 0 % | 50 % | 80 % |
| Additive 1 | 29.4 | 28.4 | 27.7 |
| Additive 2 | 18.5 | 18.0 | 19.7 |
| Additive 3 | 18.2 | 16.7 | 16.4 |

(see experimental details in example 3 below)

Efficient stabilization containing high phosphite levels are particularly useful in some applications like in particular PP fibers and in that respect additive 2 in particular could be a very good alternative to Lowinox® 1790 (= additive 4) which was described as the preferred additive in the patent application PCT/GB03/002279 (publication number WO 03/099918 A1). 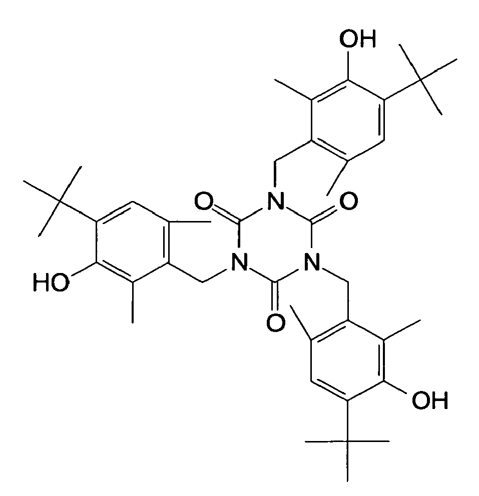 Additive 4 = 1,3,5-tris(4-t-butyl-3hydroxy-2,6-dimethylbenzyl)-isocyanurate = Lowinox® 1790 - CAS N° 40601-76-1

Additive 1 is well known by the trade as giving relatively low discoloration in PP fibers exposed to NOₓ fumes (like in gas fading test). Surprisingly we have discovered that the discoloration observed on PP pellets exposed for 2 hours to NOₓ fumes were much less marked for additives 2 and 3 than for additive 1. In fact the color change was of the same order of magnitude or even better as the one observed with additive 4 as shown in the following table:

**Table 6: Color change resulting for severe NOₓ exposure for PP granules stabilized with 1000 ppm of various additives.**

| Formulation | Delta YI |
|---|---|
| Unstabilised | 1.37 |
| B-blend | 6.06 |
| Additive 1 | 10.01 |
| Additive 2 | 2.83 |
| Additive 3 | 1.02 |
| Additive 4 | 1.88 |

(see experimental details in example 4 below)

As also can be seen in Table 6, the results obtained by using additive 2 and 3 are improved when compared with additive 1. Additive 3 is even better than additive 4.

In the previous table B-Blend is the usual combination of 1 part of tetrakismethylene (3,5-di-t-butyl-4-hydroxyhydrocinnamate)methane (Anox ® 20 - CAS No. 6683-19-8) with 1 part of tris(2,4-di-t-butylphenyl)phosphite (Alkanox® 240 - CAS No. 31570-04-4). These results were also observed with lower concentrations of the antioxidants tried. This surprising discovery is somewhat hidden by the high initial color due to the complex formation of the quinoleic form of additives 2, 3 and 4 with catalysts residues.

To avoid this potential artifact, discoloration caused by NOₓ exposure on low density polyethylene (LDPE) stabilized with various antioxidants was measured. The results are presented in the following table:

**Table 7: Color change resulting for severe NOₓ exposure of LDPE granules stabilized with 250 ppm of various additives.**

| Additive | YI before NOₓ exposure | YI after NOₓ exposure | Delta |
|---|---|---|---|
| No additive | -3.98 | -3.21 | 0.77 |
| Additive 1 | -4.56 | 16.25 | 20.81 |
| Additive 2 | -4.66 | 3.83 | 8.49 |
| Additive 3 | -3.76 | -1.76 | 2.00 |
| Additive 4 | -4.35 | 3.16 | 7.51 |
| Anox 20 | -4.52 | 9.43 | 13.95 |

(see experimental details in example 5 below)

Those results show indeed the intrinsic characteristic of additives 2, 3 and 4 to cause less yellowing than additive 1 in a polymer not containing transition metal catalysts residues. On the other hand they demonstrate clearly that additive 1 is much more sensitive to NOₓ than either additives 2, 3 and 4. The excellent and surprising results discovered with additive 3 are particularly useful.

It was found that the use of additive 2 and/or 3 is particularly useful for stabilizing PP. Particularly, it was found that with additives 2 and/or 3, when using a polymer with extremely low transition metal catalyst residue, like PP containing 0.5 ppm titanium, the addition of a suitable color suppressant like di-pentaerythritol (DPE) was effective in improving the MFI. This is presented in the following table, in which "phenol" means additive 1, additive 2, additive 3 or additive 4:

**Table 8: MFI (230°C-2.16 kg) at pass 5 when using 250 ppm DPE**

| Additive | MFI (230°C-2.16 kg) at pass 5 | | |
|---|---|---|---|
| | Phenol alone | DPE | DPE + phosphite |
| None | 34.89 | 26.24 | 26.50 |
| Add.1 | 28.9 | 22.28 | 16.17 |
| Add. 2 | 17.89 | 18.1 | 14.86 |
| Add. 3 | 17.93 | 17.39 | 14.70 |

(see experimental details in example 6 below)

This surprising high efficiency of additives 2 and 3 as antioxidants coupled with their surprisingly high intrinsic resistance to discoloration induced by NOₓ makes them useful candidates to stabilize polyurethane fibers currently described by the trade as spandex or elastane fibers.
Du Pont de Nemours has indeed mentioned in WO 02/098970 A1 the usefulness of a composition comprising at least three components: (a) mono-hindered hydroxyphenyl group coupled with (b) unsymmetrically di-hindered hydroxyphenyl group together with (c) an inorganic chlorine resist additive to stabilize spandex against atmospheric fumes. This international patent application mentioned specifically as molecules belonging to this second group (b) 3 commercial molecules:
1. Additive 4, i.e. 1,3,5-tris(4-t-butyl-3hydroxy-2,6-dimethylbenzyl)-isocyanurate - CAS No. 40601-76-1 (commercial name Cyanox® 1790),
2. Ethylene-1,2-bis(oxyethylene)bis{3-(5-t-butyl-4-hydroxy-m-tolyl)propionate} - CAS No. 36443-68-2 (commercial name Irganox® 245)
3. 2,4,8,10-tetraoxaspiro{5,5}undecane-3,9-diylbis{2,2-dimethyl-1,2-ethanediyl)-3-(3-t-butyl-4-hydroxy-5-methylphenyl)proprionate - CAS N°90498-90-1 (commercial name Sumilizer® GA 80)

Surprisingly, it has been found by the present invention that not only additive 2 and/or 3 could be used instead of the unsymmetrically di-hindered hydroxyphenyl group but also that
1. Additives 2 and/or 3 show already when used alone to stabilize spandex better initial color than additive 1
2. Additive 2 already when used alone allows achieving markedly better color retention in severe heat setting conditions (i.e. 190°C for 2 minutes). This performance is similar to the one observed with additive 4.
3. Additives 2 and/or 3 offer already when used alone much better gas fading resistance than additive 1 and also equivalent or slightly better gas fading resistance than additive 4.

Those findings are confirmed by the following experimental data on spandex fibers stabilized with 1 % of single additive:

**Table 9: Color of spandex fibers before and after gas fading**

| Additive | YI original* | YI after heat setting | YI after gas fading |
|---|---|---|---|
| No additive | 7.4 | 21.9 | 19.6 |
| Additive 1 | 5.2 | 30.6 | 51.8 |
| Additive 2 | -1.1 | 13.1 | 28.5 |
| Additive 3 | -2.2 | 12.1 | 16.2 |
| Additive 4 | 1.0 | 10.1 | 25.4 |

| | | | |
|---|---|---|---|
| * "YI original" refers to a sample after a first thermal stress according to method 8 (the funnel drying process simulates a thermal shock experienced by the polymer in a dry spinning process. The YI original value of the unstabilized sample (no additive) is therefore already negatively affected. (see experimental details in example 7 below) | | | |

Although the applicant wishes not to be bound to any theory, it is believed that the useful results obtained with additive 2 and 3 could be explained by the fact that additives 2 and 3 have an intrinsically high efficiency and that their chemical structures give them a high affinity for the spandex structure. The latter seems to be confirmed by the finding that the fibers produced by a wet spinning process contained still the nominal amount of additive added (1 %).

### Experimental examples

The following examples illustrate the invention further without, however, limiting the invention. Unless otherwise indicated, parts and percentages relate to the weight, as in the remainder of the description.

Particularly preferred embodiments of the present invention are described by the dependent claims and are in total part of the description of the present invention.

### Experimental methods description

### Method 1: mixing of the additive mixtures in polypropylene or low density polyethylene

50% of the polymer powder is weighed into a plastic bag; the powder additives are weighed separately and added to the polymer powder in the bag. The remaining polymer powder is then added and the bag is blown up with nitrogen and shaken for at least 2 minutes in different directions.

### Method 2: Pass zero compounding

After 2 minutes shaking of the plastic bag, the mixture is poured into the hopper of a Brabender single screw extruder (Compression ratio 3:1, L/D 25, screw diameter 19 mm, screw speed 60 rpm).

The mixture is extruded on the Brabender single screw extruder using the following settings:
- Temperature profile for LDPE: 175-175-180-190°C
- 1 extrusion pass under nitrogen blanket

Strands are collected and granulated. This first extrusion pass is referred to as the compounding pass or pass zero.
(This procedure can also be applied to PP and in this case the temperature profile is: 200-215-235-250°C)

### Method 3: Multi-passes extrusion

In order to evaluate the performance of different additive formulations, the mixture prepared according to method 1 for PP (and according to methods 1 and 2 for LDPE), is extruded on the Brabender single screw extruder using the following settings:
- Temperature profile for PP: 200-225-250-275°C
- 5 extrusion passes in open air.
- After each extrusion pass the strands are caught up and granulated. Pellets are collected after the 1^{st}, 3^{rd} and 5^{th} extrusion pass for further measurements (color measurements, melt flow measurements) whereas oven ageing performances are measured from pellets collected after 2^{nd} extrusion pass.

### Method 4: Oven ageing testing

Granules collected after the second pass are injection molded on a Arburg 250-75-220 D machine using a temperature profile of 210-220-230°C along the barrel and 230°C at the nozzle. 1 mm thick plates are produced and stored in forced air ovens set at 135°C and 150°C. Test specimens failure is assessed by bending the samples.

### Method 5: MFI measurement

The processing stability of a formulation is determined by measuring the melt flow index (MFI) on pellets collected after the 1^{st}, 3^{rd} and 5^{th} extrusion passes. The melt flow is measured according to standard ISO 1133 using a temperature of 230°C and a weight of 2.16 kg in the case of PP.

### Method 6: Color measurement on granules

The color stability of a formulation is determined by measuring the Yellowing Index (YI) on pellets, which are collected after the 1 st, 3rd and 5th extrusion passes. Yellowing index is measured according to standard ASTM E313.

### Method 7: Discoloration induced by NOₓ on granules

Additives are mixed with the polymer powder according to method 1. For PP, the mixture is extruded twice according to method 3. For LDPE, the mixture is extruded under nitrogen according to method 2.
Discoloration induced by NOₓ is carried out by exposing granules kept in a desiccator to NOₓ fumes for 2 hours. Those fumes are generated by reaction of copper with nitric acid. Granules color is measured 48 hours after the end of exposure to NOₓ fumes. This measurement is carried out according to method 6.

### Method 8: Spandex fibers polymerization and spinning procedure

2 parts of polyol PolyTHF® 2000 polyether from BASF are introduced in a 3-necks balloon. The atmosphere in this balloon is made up by argon which has been dried by bubbling in a flask of sulfuric acid. The solvent, DMAC (N,N'-dimethyl-acetamide) is added to dissolve the polyol. 3 parts of MDI (4,4'-diphenylmethanediisocyanate) are weighted and introduced in the 3-necks balloon to form the pre-polymer. The reaction is carried out by keeping the 3-necks balloon in a water bath heated at 70-75°C.
Once the pre-polymer is formed, n-octanol is added to prevent further reaction of isocyanate. The amount of isocyanate groups is tested by colorimetric titration with di-butyl amine. The solution is cooled down and the 3 necks balloon is placed in an ice bath. The chain extender, ethylene diamine, is then added. The solution prepared following this method contains 20 % of polymer. Additive(s) is(are) weighted and dissolved in DMAC and this solution is added to the polymer solution. The molecular weight of the polymer is checked by measurement of the intrinsic viscosity.
Spinning is carried out by extruding the polymer solution through a spinneret plate in a water bath where the polymer coagulates. The yarn is taken on three sets of godet rolls operating at speeds of 15, 16 and 20 m/min. The yarn weight is fixed by adjusting the extrusion gear pump speed.
The spun yarns are left to dry for 24 hours in air and this process is completed by allowing the yarn to pass at a speed of 2 m/min through a 10 m long heated funnel having a temperature of 165°C. This drying process is intended to simulate the thermal shock experienced by the polymer in a dry spinning process.
Yarns are wound at this stage but can be still heat set by keeping them for 2 minutes in an oven set at a temperature of 190°C.

### Method 9: Gas fading on fibers

After the funnel drying operation, the yarns are carefully wound with minimum tension on a white PTFE card. This card is hanged in a gas fading chamber which operates with combustion gases produced by burning butane gas according to AATCC Test Method 23-1988

### Raw materials used

- Polypropylene powder made in a Spheripol® (trademark of Basell) bulk polymerization process was used. This powder is characterized by a nominal melt flow index (230°C-2.16 kg) of 12 g/10 min and has a titanium catalyst residue of 0.5 ppm. It contains 200 ppm of octadecyl 3-(3',5'-di-t-butyl-4'-hydroxyphenyl)propionate (Anox® PP-18).
- LDPE powder has been prepared by mechanically grinding unstabilised granules characterized by a melt flow index (190°C-2.16 kg) of 2 g/10 min and a density of 0.922 g/cm³. The powder was characterized by a maximum size of 500 µm.
- Additive 1: the material used was a commercial sample of Anox® IC-14
- Additive 2: the material used has been synthesized specially for this research and its structure has been confirmed by NMR. The product obtained was a white fine powder characterized by a melting point of 192-194°C. It is soluble at room temperature in DMAC.
- Additive 3: the material used has been synthesized specially for the present tests and its structure has been confirmed by NMR. The product obtained was a white coarse powder characterized by a melting point of 224-228°C. It has a solubility of 61 % at room temperature in DMAC.
- Additive 4: the material used was a commercial sample of Lowinox® 1790
- Tetrakismethylene (3,5-di-t-butyl-4-hydroxyhydrocinnamate) methane (CAS No. 6683-19-8): the material used was a commercial sample of Anox® 20
- Tris(2,4-di-t-butylphenyl)phosphite (CAS No. 31570-04-4): the material used was a commercial sample of Alkanox® 240.

### Example 1: oven ageing

Polypropylene powder described above has been used to make the following compounds:
- Formulation 1: PP powder + 500 ppm calcium stearate
- Formulation 2: PP powder + 500 ppm calcium stearate + 250 ppm additive 1
- Formulation 3: PP powder + 500 ppm calcium stearate + 500 ppm additive 1
- Formulation 4: PP powder + 500 ppm calcium stearate + 750 ppm additive 1
- Formulation 5: PP powder + 500 ppm calcium stearate + 1000 ppm additive 1
- Formulation 6: PP powder + 500 ppm calcium stearate + 125 ppm additive 2
- Formulation 7: PP powder + 500 ppm calcium stearate + 250 ppm additive 2
- Formulation 8: PP powder + 500 ppm calcium stearate + 500 ppm additive 2
- Formulation 9: PP powder + 500 ppm calcium stearate + 750 ppm additive 2
- Formulation 10: PP powder + 500 ppm calcium stearate + 1000 ppm additive 2

Each compound has been mixed according to test method 1. Granules have been submitted to 2 extrusion passes according to test method 3, injection molded and aged at 135 and 150°C according to test method 4. The results have already been presented in tables 1 and 2 above and are reproduced hereunder:

**Table 10: Oven ageing performances of PP stabilized with additives 1 and 2**

| Formulation | Additive | Concentration | Time to failure at 135°C | Time to failure at 150°C |
|---|---|---|---|---|
| Form 2 | Additive 1 | 250 ppm | 305 h | 38 h |
| Form 3 | Additive 1 | 500 ppm | 324 h | 38 h |
| Form 4 | Additive 1 | 750 ppm | 400 h | 39 h |
| Form 5 | Additive 1 | 1000 ppm | 554 h | 51 h |
| Form 6 | Additive 2 | 125 ppm | 283 h | 38 h |
| Form 7 | Additive 2 | 250 ppm | 305 h | 38 h |
| Form 8 | Additive 2 | 500 ppm | 373 h | 38 h |
| Form 9 | Additive 2 | 750 ppm | 433 h | 39 h |
| Form 10 | Additive 2 | 1000 ppm | 498 h | 42 h |

### Example 2: multi-passes extrusion of PP

On top of the compounds described in example 1, PP powder described above has been used to make the following additional compounds
- Formulation 11: PP powder + 500 ppm calcium stearate + 125 ppm additive 3
- Formulation 12: PP powder + 500 ppm calcium stearate + 250 ppm additive 3
- Formulation 13: PP powder + 500 ppm calcium stearate + 500 ppm additive 3
- Formulation 14: PP powder + 500 ppm calcium stearate + 750 ppm additive 3
- Formulation 15: PP powder + 500 ppm calcium stearate + 1000 ppm additive 3
- Formulation 20: PP powder + 500 ppm calcium stearate + 1000 ppm additive 4
- Formulation 21: PP powder + 500 ppm calcium stearate + 500 ppm Anox 20 + 500 ppm Alkanox 240 (B-Blend)

Each compound has been mixed according to test method 1. The mixtures have been submitted to 5 extrusion passes according to test method 3. Samples have been collected at pass 1, 3 and 5 and their MFI measured according to test method 5 described above.
The results are presented in the following table (Add. = additive)

**Table 11: MFI of PP stabilized with various additives in multi-passes extrusion experiment.**

| Form | Stab | Conc (ppm) | MFI (230-2.16) g/10 min | | |
|---|---|---|---|---|---|
| | | | Pass 1 | Pass 3 | Pass 5 |
| 1 | None | 0 | 19.48 | 27.30 | 34.89 |
| 2 | Add. 1 | 250 | 17.03 | 21.84 | 28.90 |
| 3 | Add. 1 | 500 | 15.94 | 20.18 | 25.04 |
| 4 | Add. 1 | 750 | 15.41 | 18.55 | 22.32 |
| 5 | Add. 1 | 1000 | 15.05 | 18.02 | 20.87 |
| 6 | Add. 2 | 125 | 14.55 | 18.35 | 22.50 |
| 7 | Add. 2 | 250 | 13.84 | 15.58 | 17.89 |
| 8 | Add. 2 | 500 | 13.51 | 14.45 | 16.42 |
| 9 | Add. 2 | 750 | 13.23 | 14.55 | 15.14 |
| 10 | Add. 2 | 1000 | 13.02 | 14.28 | 16.29 |
| 11 | Add. 3 | 125 | 13.20 | 15.37 | 18.13 |
| 12 | Add. 3 | 250 | 13.49 | 15.33 | 17.93 |
| 13 | Add. 3 | 500 | 13.35 | 15.34 | 17.94 |
| 14 | Add. 3 | 750 | 13.65 | 15.82 | 18.34 |
| 15 | Add. 3 | 1000 | 13.56 | 15.65 | 18.33 |

### Example 3: multi-passes extrusion of PP stabilized with 250 ppm of additives blends (mixtures phenolic/phosphite)

PP powder described above has been used to make the following compounds:
- Formulation 22: PP powder + 500 ppm calcium stearate + 250 ppm Alkanox 240
- Formulation 23: PP powder + 500 ppm calcium stearate + 50 ppm Additive 1 + 200 ppm Alkanox 240
- Formulation 24: PP powder + 500 ppm calcium stearate + 100 ppm Additive 1 + 150 ppm Alkanox 240
- Formulation 25: PP powder + 500 ppm calcium stearate + 125 ppm Additive 1 + 125 ppm Alkanox 240
- Formulation 26: PP powder + 500 ppm calcium stearate + 150 ppm Additive 1 + 100 ppm Alkanox 240
- Formulation 27: PP powder + 500 ppm calcium stearate + 200 ppm Additive 1 + 50 ppm Alkanox 240
- Formulation 28: PP powder + 500 ppm calcium stearate + 250 ppm Additive 1
- Formulation 29: PP powder + 500 ppm calcium stearate + 50 ppm Additive 2 + 200 ppm Alkanox 240
- Formulation 30: PP powder + 500 ppm calcium stearate + 100 ppm Additive 2 + 150 ppm Alkanox 240
- Formulation 31: PP powder + 500 ppm calcium stearate + 125 ppm Additive 2 + 125 ppm Alkanox 240
- Formulation 32: PP powder + 500 ppm calcium stearate + 150 ppm Additive 2 + 100 ppm Alkanox 240
- Formulation 33: PP powder + 500 ppm calcium stearate + 200 ppm Additive 2 + 50 ppm Alkanox 240
- Formulation 34: PP powder + 500 ppm calcium stearate + 250 ppm Additive 2
- Formulation 35: PP powder + 500 ppm calcium stearate + 50 ppm Additive 3 + 200 ppm Alkanox 240
- Formulation 36: PP powder + 500 ppm calcium stearate + 100 ppm Additive 3 + 150 ppm Alkanox 240
- Formulation 37: PP powder + 500 ppm calcium stearate + 125 ppm Additive 3 + 125 ppm Alkanox 240
- Formulation 38: PP powder + 500 ppm calcium stearate + 150 ppm Additive 3 + 100 ppm Alkanox 240
- Formulation 39: PP powder + 500 ppm calcium stearate + 200 ppm Additive 3 + 50 ppm Alkanox 240
- Formulation 40: PP powder + 500 ppm calcium stearate + 250 ppm Additive 3

The compounds were mixed according to test method 1 and multi-passes extrusion was carried out according to test method 3. The results are presented in the following table:

**Table 12: MFI of PP stabilized with 250 ppm of mixtures of various phenolic additives with Alkanox® 240 in multi-passes extrusion experiment**

| Form | Additive | conc. | MFI (230-2.16) g/10 min | | |
|---|---|---|---|---|---|
| | | Additive (ppm) | Pass 1 | Pass 3 | Pass 5 |
| 22 | None | 0 | 15.1 | 20.2 | 26.5 |
| 23 | Add. 1 | 50 | 15.3 | 20.5 | 27.7 |
| 24 | Add. 1 | 100 | 16.2 | 22.1 | 28.8 |
| 25 | Add. 1 | 125 | 16.2 | 21.4 | 28.4 |
| 26 | Add. 1 | 150 | 15.9 | 21.1 | 27.3 |
| 27 | Add. 1 | 200 | 17.1 | 23.3 | 30.1 |
| 28 | Add. 1 | 250 | 17.5 | 22.8 | 29.4 |
| 29 | Add. 2 | 50 | 13.1 | 16.2 | 19.7 |
| 30 | Add. 2 | 100 | 13.3 | 15.4 | 18.6 |
| 31 | Add. 2 | 125 | 13.1 | 15.1 | 18.0 |
| 32 | Add. 2 | 150 | 13.2 | 15.3 | 18.1 |
| 33 | Add. 2 | 200 | 13.1 | 15.2 | 17.8 |
| 34 | Add. 2 | 250 | 13.4 | 15.3 | 18.5 |
| 35 | Add.3 | 50 | 12.9 | 14.1 | 16.4 |
| 36 | Add.3 | 100 | 13.1 | 14.4 | 16.5 |
| 37 | Add.3 | 125 | 13.0 | 14.5 | 16.7 |
| 38 | Add.3 | 150 | 13.3 | 14.9 | 17.2 |
| 39 | Add.3 | 200 | 13.5 | 14.9 | 17.4 |
| 40 | Add.3 | 250 | 13.6 | 15.5 | 18.2 |

### Example 4: NOₓ resistance of PP stabilized with different antioxidants

Granules of selected formulations obtained at pass 2 in the multi-passes extrusion experiment carried out according to test method 3 were isolated and submitted to NOₓ fumes exposure for 2 hours and their color measured after 48 h according to test method 4. The results have already been presented in table 6 and are reproduced hereunder:

**Table 13: Color change resulting for severe NOₓ exposure for PP granules stabilized with 1000 ppm of various additives.**

| Formulation | Additive | ppm | Delta YI |
|---|---|---|---|
| Formulation 1 | No additive | 0 | 1.37 |
| Formulation 21 | B-blend | 1000 | 6.06 |
| Formulation 5 | Additive 1 | 1000 | 10.01 |
| Formulation 10 | Additive 2 | 1000 | 2.83 |
| Formulation 15 | Additive 3 | 1000 | 1.02 |
| Formulation 20 | Additive 4 | 1000 | 1.88 |

### Example 5: NOₓ resistance of LDPE stabilized with different additives

LDPE powder described above has been used to make the following compounds:
- Formulation 41: LDPE powder + 500 ppm calcium stearate
- Formulation 42: LDPE powder + 500 ppm calcium stearate + 250 ppm additive 1
- Formulation 43: LDPE powder + 500 ppm calcium stearate+250 ppm additive 2
- Formulation 44: LDPE powder + 500 ppm calcium stearate + 250 ppm additive 3
- Formulation 45: LDPE powder + 500 ppm calcium stearate + 250 ppm additive 4
- Formulation 46: LDPE powder + 500 ppm calcium stearate + 250 ppm Anox®20

The compounds were granulated under nitrogen according to test method 2. Granules were submitted to NOₓ fumes for 2 hours and their color measured after 48 h according to test method 4. The results have already been presented in table 7 and are reproduced hereunder:

**Table 14: Color change resulting for severe NOₓ exposure of LDPE granules stabilized with 250 ppm of various additives.**

| Formulation | Additive | ppm | YI before NOₓ | YI after NOₓ | Delta YI |
|---|---|---|---|---|---|
| Formulation 41 | Unstabilized | 0 | -4.0 | -3.2 | 0.8 |
| Formulation 42 | Additive 1 | 250 | -4.6 | 16.3 | 20.9 |
| Formulation 43 | Additive 2 | 250 | -4.7 | 3.8 | 8.5 |
| Formulation 44 | Additive 3 | 250 | -3.8 | -1.8 | 2.0 |
| Formulation 45 | Additive 4 | 250 | -4.4 | 3.2 | 7.6 |
| Formulation 46 | Anox 20 | 250 | -4.5 | 9.4 | 13.9 |

### Example 6: Use of color suppressant without and with phosphite

PP powder described above was used to make the following compounds:
• Formulation 47: PP powder + 500 ppm calcium stearate + 250 ppm di-pentaerythritol
• Formulation 48: PP powder + 500 ppm calcium stearate + 250 ppm di-pentaerythritol + 250 ppm additive 1
• Formulation 49: PP powder + 500 ppm calcium stearate + 250 ppm di-pentaerythritol + 250 ppm additive 2
• Formulation 50: PP powder + 500 ppm calcium stearate + 250 ppm di-pentaerythritol + 250 ppm additive 3
• Formulation 51: Formulation 48: PP powder + 500 ppm calcium stearate + 250 ppm di-pentaerythritol + 250 ppm additive 1 + 500 ppm Alkanox® 240
• Formulation 52: PP powder + 500 ppm calcium stearate + 250 ppm di-pentaerythritol + 250 ppm additive 2 + 500 ppm Alkanox® 240
• Formulation 53: PP powder + 500 ppm calcium stearate + 250 ppm di-pentaerythritol + 250 ppm additive 3 + 500 ppm Alkanox® 240.

The compounds were mixed according to test method 1 and multi-passes extrusion was carried out according to test method 3. The results are presented in the following table ("Phosph" means Alkanox® 240 (tris(2,4-di-t-butylphenyl)phosphite):

**Table 15: MFI (230°C-2.16 kg) at passes 1,3 and 5 when using DPE**

| Form | Add. | Phosph | DPE | MFI (230°C-2.16 kg) | | |
|---|---|---|---|---|---|---|
| | | in ppm | | Pass 1 | Pass 3 | Pass 5 |
| F 1 | None | None | None | 19.48 | 27.30 | 34.89 |
| F 2 | Add. 1 | None | None | 17.03 | 21.84 | 28.90 |
| F 7 | Add. 2 | None | None | 13.84 | 15.58 | 17.89 |
| F 12 | Add. 3 | None | None | 13.49 | 15.33 | 17.93 |
| F 47 | None | None | 250 | 14.91 | 21.40 | 26.24 |
| F 48 | Add. 1 | None | 250 | 15.48 | 18.73 | 22.28 |
| F 49 | Add. 2 | None | 250 | 14.28 | 15.84 | 18.10 |
| F 50 | Add. 3 | None | 250 | 13.32 | 14.99 | 17.39 |
| F 22 | None | 250 | 250 | 15.1 | 20.2 | 26.5 |
| F 51 | Add. 1 | 500 | 250 | 13.20 | 14.97 | 16.17 |
| F 52 | Add. 2 | 500 | 250 | 12.73 | 13.92 | 14.86 |
| F 53 | Add. 3 | 500 | 250 | 12.70 | 14.02 | 14.70 |

### Example 7: Color on spandex fibers before and after gas fading

Spandex fibers were prepared as described in method 8 and the following formulations were made:
- Formulation 54: preparation as described in method 8 without additive
- Formulation 55: preparation as described in method 8 + 1 % additive 1
- Formulation 56: preparation as described in method 8 + 1 % additive 2
- Formulation 57: preparation as described in method 8 + 1 % additive 3
- Formulation 58: preparation as described in method 8 + 1 % additive 4 Fibers with a count of about 900 dTex were spun and heat set at 190°C for 2 minutes according to the procedure described in method 8. They were carefully wound with minimum tension on a white PTFE sample holders and exposed to NOₓ fumes for 18 h according to procedure described in method 9. The color values measured have already been presented in table 9 and are reproduced hereunder:

**Table 16: Color of spandex fibers before and after gas fading**

| | | | | | | |
|---|---|---|---|---|---|---|
| Formulation | Additive | YI original | YI after heat setting | Delta YI in heat setting | YI after gas fading | Delta YI in gas fading |
| Form 54 | None | 7.4 | 21.9 | 14.5 | 19.6 | 12.2 |
| Form 55 | Additive 1 | 5.2 | 30.6 | 25.4 | 51.8 | 46.6 |
| Form 56 | Additive 2 | -1.1 | 13.1 | 14.2 | 28.5 | 29.6 |
| Form 57 | Additive 3 | -2.2 | 12.1 | 14.3 | 16.2 | 18.4 |
| Form 58 | Additive 4 | 1.0 | 10.1 | 9.1 | 25.4 | 24.5 |

The trademarks as referred to the description belong to:
- Goodrite - Goodrich
- Lowinox, Anox, Alkanox - Chemtura
- Cyanox - Cytec Industries
- Irganox - Ciba Specialty Chemicals
- Sumilizer - Sumitomo
- PolyTHF - BASF
- Spheripol - Basell

## Claims

1. Use of an additive composition comprising a compound of the following formula (I): 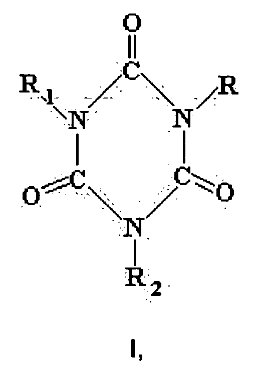 wherein R, R₁, and R₂ are of the following formula (II) 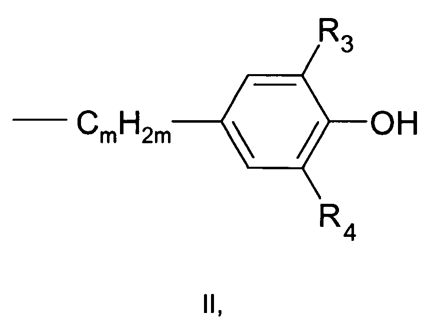 wherein
m is an integer of from 1 to 4,
R₃ is a methyl group,
R₄ is an alkyl group,
for improving
(a) the preservation of the intrinsic molecular integrity of a polymer to which the additive is added, measured by the melt flow index protection,
and/or
(b) the gas fading resistance of a polymer to which the additive is added
in comparison to the use of tris-(3,5-di-t-butyl-4-hydroxybenzyl)isocyanurate as additive in said polymer.

2. Use according to claim 1, whereby sulfur compounds containing two or more sulfur atoms are absent in the additive composition.

3. Use according to claim 1, whereby sulfur-based compounds are absent in the additive composition.

4. Use according to any one of claims 1 to 3, whereby m is 1.

5. Use according to any one of claims 1 to 4, whereby R₄ is a C₁ to C₄ alkyl group.

6. Use according to claim 5, whereby R₄ is a methyl group or a tert-butyl group.

7. Use according to any one of claims 1 to 6, whereby the additive composition comprises one or more co-additive(s).

8. Use according to claim 7, wherein the co-additive(s) is/are selected from the group of phosphites, antacids, color suppressants, UV stabilizers, further antioxidants, and amine stabilizers including hindered amine light stabilizers (HALS).

9. Use according to claim 8, wherein the co-additives are a phosphite and a color suppressant.

10. Use according to any one of claims 1 to 9, whereby the polymer is a homopolymer of a polyurethane, polyolefin, polystyrene, polyamide, or polyester or the polymer is a copolymer comprising at least one of a polyurethane, polyolefin, polystyrene, polyamide, polyol, polyester, polybutadiene, or acrylonitrile.

11. Use according to any one of claims 1 to 10, whereby the polymer is in the form of a fiber, preferably spandex.

12. Use according to claim 10, whereby the polymer is a polyethylene or polypropylene.

13. Use according to any one of claims 1 to 12, whereby the additive composition is added to the polymer in a concentration of 10 ppm to 50,000 ppm, preferably 10 ppm to 30,000 ppm, preferably 10 ppm to 10,000 ppm, even more preferably below 1,000 ppm, based on the weight of the polymer.

14. Use according to any one of claims 1 to 11 or 13, wherein the additive composition is added to a polyolefin as said polymer in a concentration of 10 ppm to 1,000 ppm, preferably below 1,000 ppm, based on the weight of the polyolefin.

15. Use according to any one of claims 1 to 14, for improving
(a) the preservation of the intrinsic molecular integrity of a polymer to which the additive is added, measured by the melt flow index protection,
and
(b) the gas fading resistance of a polymer to which the additive is added
in comparison to the use of tris-(3,5-di-t-butyl-4-hydroxybenzyl)isocyanurate as additive in said polymer.

16. Use according to any one of claims 1 to 15 for preserving and protecting said polymer against the deleterious effects of heat, visible or ultraviolet light and/or oxygen and/or other oxidizing agents, preferably NOₓ, chlorine and/or ozone.
